# EUROPEAN PATENT SPECIFICATION

(11) **EP 1 801 048 B1**
(45) Date of publication and mention of the grant of the patent: **13.08.2008**
(21) Application number: 06126467.7
(22) Date of filing: 19.12.2006
(51) Int. Cl.: B65G 47/90, B65G 47/91, B65G 59/02, B65G 61/00, B21D 43/10

(54) **Product handling device**
Vorrichtung zur Produktbehandlung
Appareil de manutention de produits

(30) Priority: 20.12.2005 IT TO20050882
(43) Date of publication of application: 27.06.2007
(73) Proprietor: OMA S.r.l., 37069 Villafranca di Verona (IT)
(72) Inventor: Baldi, Giampietro, 37069 Villafranca di Verona (IT)
(74) Representative: Jorio, Paolo

(56) References cited:
- EP-A2- 1 338 536
- DE-A1- 3 511 531
- DE-B- 1 061 487

## Description

The present invention relates to a product handling device.

More specifically, the present invention relates to a device for handling glass bottles and similar, to which the following description refers purely by way of example.

From European Patent EP-1338536, depalletizing machines are known in which the support trays, on top of the "pallet" of bottles being unloaded inside the depalletizing machine, are removed by an articulated pantograph arm fitted on the end with a pneumatic gripping member.

More specifically, the articulated pantograph arm is fixed to and projects from a horizontal support cross member movable vertically on the supporting frame of the machine, and comprises a first half-arm fitted to the body of the support cross member to rotate, with respect to the body of the support cross member, about a first vertical axis; a second half-arm fitted to the free end of the first half-arm to rotate freely, with respect to the first half-arm, about a second vertical axis; and cascade gearing for transmitting rotation of the first half-arm about the first vertical axis to the body of the second half-arm, so as to coordinate the scissor-like opening of the two half-arms with rotation of the first half-arm with respect to the horizontal support cross member.

The first half-arm of the articulated pantograph arm is hinged to the horizontal support cross member by a through pin, which extends coaxially with the first vertical axis and engages the body of the cross member in freely rotating manner. A first end of the pin is fitted rigidly to the body of the first half-arm, and the second end of the pin is connected mechanically to an actuating member which, on command, rotates the pin about the first vertical axis to open the two half-arms scissor-fashion.

Though highly compact, articulated pantograph arms have so far been used exclusively for handling fairly lightweight products, such as the support trays used in the construction of "pallets" of glass bottles, because the torque exerted on the pin to scissor-open the two half-arms increases considerably alongside an increase in the weight of the products being handled, with all the drawbacks this entails. A high torque, in fact, calls for the use of actuating members of greater power, weight, and running cost than those of other solutions currently used for the purpose, thus making articulated pantograph arms economically unfeasible for handling products even only slightly heavier than normal support trays.

It is an object of the present invention to provide a product handling device employing an articulated pantograph arm, and which is capable of handling glass bottles and, generally speaking, products heavier than conventional "pallet" support trays, without recourse to more than average-power actuating members.

According to the present invention, there is provided a product handling device as claimed in Claim 1 and preferably, though not necessarily, in any one of the dependent Claims.

A non-limiting embodiment of the present invention will be described by way of example with reference to the accompanying drawings, in which:
Figure 1 shows a side view, with parts in section and parts removed for clarity, of a glass bottle handling device in accordance with the teachings of the present invention;
Figure 2 shows a plan view, with parts removed for clarity, of the Figure 1 device.

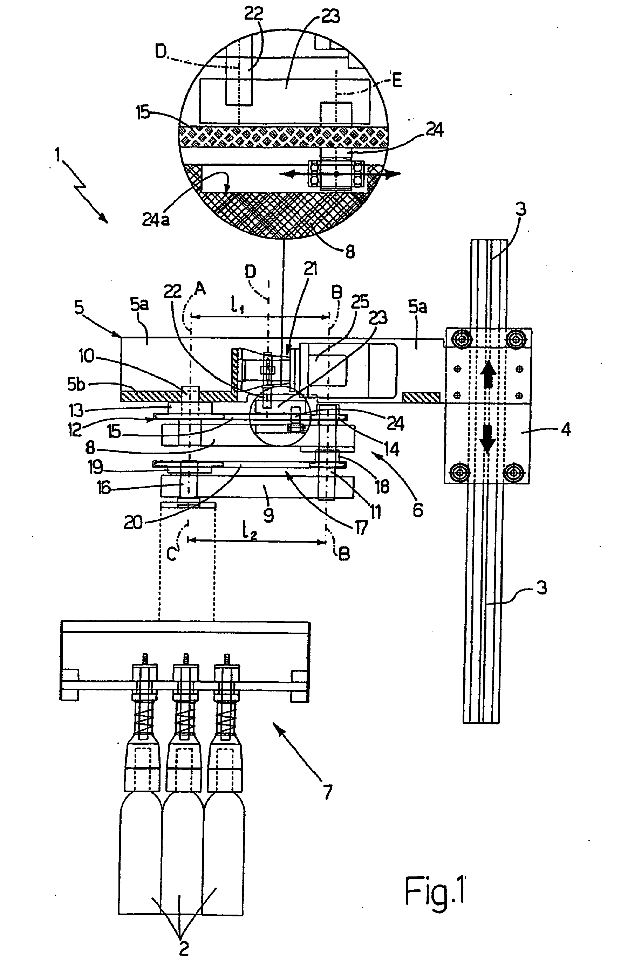

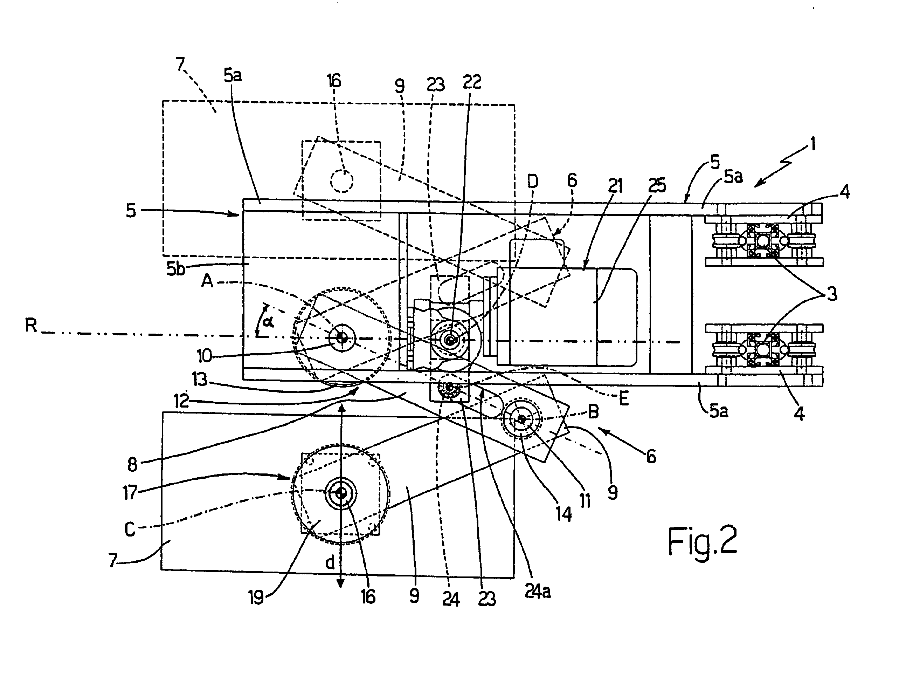

Number 1 in Figures 1 and 2 indicates as a whole a device for moving products in two substantially perpendicular directions, and which may be used to particular advantage for handling glass bottles 2 or similar.

Device 1 comprises an on-floor supporting structure having a straight supporting guide 3 extending substantially vertically alongside the bottle 2 handling area; a support carriage 4 mounted to run along straight guide 3; known drive means (not shown) for moving carriage 4, on command, along straight guide 3; and a support cross member 5 projecting substantially horizontally from carriage 4 over the bottle 2 handling area, so as to move vertically over the bottle 2 handling area while remaining parallel to itself at all times.

Device 1 also comprises an articulated pantograph arm 6 fixed beneath support cross member 5 to open or part scissor-fashion in a substantially horizontal plane (parallel to the Figure 2 plane) extending just above the bottle 2 handling area; and a movable gripping member 7, which is fixed to the free end of articulated arm 6 to face the bottle 2 handling area below, and is designed to selectively grip and retain an orderly, compact group of bottles 2.

Movable gripping member 7, being a commonly known device within the industry, needs no further description, and may obviously be replaced with another type of movable gripping member designed to grip and retain other types of products.

With reference to Figures 1 and 2, in the example shown, support cross member 5 is defined by a straight U-section beam 5 with the two sides 5a positioned vertically, and with the central portion 5b positioned substantially horizontally and directly facing the bottle 2 handling area, so as to act as a fastening point by which to fix articulated arm 6 to cross member 5.

As regards articulated pantograph arm 6, it comprises a top half-arm which is indicated in the following with number 8 and is fitted to the support cross member 5, or rather to central portion 5b of cross member 5, to rotate with respect to the cross member 5 about a substantially vertical axis A; and a bottom half-arm which is indicated in the following with number 9 and is fitted to the free end of half-arm 8 to rotate freely with respect to half-arm 8 about an axis B parallel to axis A.

More specifically, half-arms 8 and 9 extend horizontally one over the other, so that, at rest, they are substantially coplanar with a vertical reference plane R intersecting axis A; and first end of half-arm 8 is hinged to the support cross member 5 by a cylindrical through pin 10, which extends through flat portion 5b of cross member 5, coaxially with axis A, and engages the body of half-arm 8 in freely rotating manner with the interposition of appropriate known rolling bearings. In other words, the first end of half-arm 8 is mounted for rotation on through pin 10, which projects from flat portion 5b of cross member 5, coaxially with axis A, and is connected rigidly to flat portion 5b.

A first end of half-arm 9 is hinged to second end of half-arm 8 by a cylindrical through pin 11 extending, coaxially with axis B, through the bodies of half-arms 8 and 9. More specifically, pin 11 of half-arm 9 is fitted rigidly to the end of half-arm 9, and is fitted in rotary manner to the body of half-arm 8 with the interposition of appropriate known rolling bearings.

With reference to Figures 1 and 2, articulated pantograph arm 6 also comprises cascade gearing 12 for transmitting rotation of half-arm 8 about axis A to the body of half-arm 9, so that the body of half-arm 9 rotates, with respect to half-arm 8 and about axis B, at twice the angular speed of, and in the opposite direction to, rotation of half-arm 8 about axis A.

In other words, cascade gearing 12 transmits rotation of half-arm 8 about axis A to the body of half-arm 9, so as to coordinate scissor opening of half-arms 8 and 9 with rotation of half-arm 8 about axis A.

In the example shown, the cascade gearing 12 for synchronizing the movement of half-arm 9 about axis B with the movement of half-arm 8 about axis A comprises a main gear 13 fitted rigidly to pin 10 of half-arm 8 and therefore also integral with flat portion 5b of cross member 5; a secondary gear 14 fitted rigidly to the top end of pin 11 of half-arm 9; and a drive chain 15 looped about gears 13 and 14. Moreover, the nominal diameter of gear 13 is twice that of gear 14, so that gear 14 rotates about axis B at twice the angular speed at which half-arm 8 rotates about gear 13.

In addition to the above, articulated pantograph arm 6 comprises a cylindrical fastening pin 16, which is fitted through the free end of half-arm 9, projects from the free end of half-arm 9, coaxially with an axis C parallel to axes A and B, and has a coupling flange or similar at the bottom, to which movable gripping member 7 is fixed; and a second cascade gearing 17 for transmitting rotation of half-arm 9, with respect to half-arm 8 and about axis B, to pin 16.

More specifically, fastening pin 16 is inserted in freely rotating manner inside the body of half-arm 9, at a distance l₂ from axis B equal to the distance l₁ between axes A and B. In other words, the distance l₁ between axes A and B equals the distance l₂ between axes B and C.

Given the equal distance between the axes of half-arms 8 and 9, i.e. the equal distances l₁ and l₂ between axes A, B and C, and the particular gear ratio of cascade gearing 12, scissor opening of half-arms 8 and 9 is coordinated with rotation of half-arm 8 about axis A, so that angular displacement of half-arm 8 about axis A corresponds to straight translation of movable gripping member 7 in a horizontal direction d perpendicular to vertical reference plane R, which remains stationary in space.

As regards cascade gearing 17, it transmits rotation of half-arm 9, with respect to half-arm 8 and about axis B, to fastening pin 16 with a predetermined gear ratio, so that pin 16 rotates about axis C inside half-arm 9 in the opposite direction to, and at half the angular speed of, rotation of pin 11 about axis B inside half-arm 8.

As half-arms 8 and 9 are parted, i.e. as articulated arm 6 is extended, cascade gearing 17 therefore rotates pin 16 about axis C inside half-arm 9 in phase opposition to half-arm 9, so as to compensate rotation of half-arm 9 about axis B. More specifically, cascade gearing 17 rotates fastening pin 16 with respect to half-arm 9 - itself possessed of rotary-translation motion - so that, to an observer, pin 16, and movable gripping member 7 integral with it, move in a straight line at all times in direction d, with no rotation about axis C.

In other words, cascade gearing 17 rotates pin 16 inside half-arm 9 so that, as articulated arm 6 extends, movable gripping member 7 is maintained perfectly parallel to itself at all times.

In the example shown, cascade gearing 17 comprises a main gear 18 fitted in rotary manner to pin 11 of half-arm 8, between the body of half-arm 8 and the body of half-arm 9; a secondary gear 19 fitted rigidly to the top end of pin 16, at the opposite end to movable gripping member 7; and a drive chain 20 looped about gears 18 and 19. In this case, main gear 18 is fixed rigidly to the body of half-arm 8, and is half the nominal diameter of secondary gear 19, so that secondary gear 19 rotates about axis C at half the angular speed at which main gear 18 rotates with respect to half-arm 9.

With reference to Figures 1 and 2, device 1 also comprises an actuating device 21, which, on command, rotates half-arm 8 about axis A to scissor open half-arms 8 and 9, and so move movable gripping member 7 selectively on one side or the other of vertical reference plane R.

Unlike known solutions, actuating device 21 comprises a drive shaft 22, which extends alongside and parallel to pin 10 of half-arm 8, and is fitted through the body of support cross member 5 - or, rather, flat portion 5b of cross member 5 - so as to project partly beneath cross member 5, with its bottom end facing half-arm 8.

More specifically, shaft 22 extends coaxially with an axis D parallel to and a distance from axis A, and which preferably, though not necessarily, lies in vertical reference plane R.

Shaft 22 rotates about axis D inside the body of cross member 5. And actuating device 21 also comprises a crank 23, which projects from the bottom end of shaft 22 in a direction substantially perpendicular to axis D, and is fitted rigidly to shaft 22 to rotate, integrally with shaft 22, about axis D; and a cam follower pin 24, which projects from the distal end of crank 23, coaxially with an axis E parallel to and a distance from axis D, so as to slide inside a longitudinal groove 24a formed in the body of half-arm 8.

Actuating device 21 also comprises a drive unit 25 connected mechanically to the drive shaft 22 to rotate drive shaft 22, on command, clockwise or anticlockwise about axis D, and so rotate crank 23 about axis D and half-arm 8 about axis A.

Drive unit 25 is obviously fixed to the support cross member 5, and, in the example shown, is defined by a known electric motor reducer 25, which is fixed to and projects from cross member 5 so that its output shaft extends coaxially with axis D, and projects beneath support cross member 5, through a through opening formed in flat portion 5b of cross member 5, to define drive shaft 22 of actuating device 21.

Operation of device 1 as a whole can be deduced from the above description and attached drawings, with no further explanation required.

As regards operation of actuating device 21, on the other hand, 90° clockwise or anticlockwise rotation of crank 23 about axis D moves cam follower pin 24 along a semicircular path, centred about axis D, on one side or the other of vertical reference plane R. As it moves along the semicircular path, cam follower pin 24 slides freely inside longitudinal groove 24a formed in half-arm 8, and exerts torque on half-arm 8 to rotate it about axis A and so scissor open articulated arm 6.

Obviously, the maximum angle of rotation α of half-arm 8 about axis A depends on the distance between axes D and E, and on the length and position of longitudinal groove 24a on half-arm 8.

The main advantage of device 1 for handling bottles 2, as described above, is obvious : by virtue of the design of actuating device 21, scissor opening of articulated arm 6 no longer requires particularly high torques, even when handling products heavier than those normally permitted. Actuating device 21, in fact, as opposed to acting directly on pin 10, exploits the variable distance between axis E of cam follower pin 24 and the axis of rotation A of half-arm 8 to multiply the torque transmitted to shaft 22 by drive unit 25.

Another advantage of device 1 is that of subjecting the products being handled to less acceleration, as compared with the solution described in European Patent EP-1338536, along the start and end portion of the path travelled by movable gripping member 7. The torque exerted by actuating device 21 on half-arm 8, in fact, varies as a function of the instantaneous position of half-arm 8, is maximum when half-arm 8 is aligned beneath shaft 22, with crank 23 and half-arm 8 parallel to each other and to vertical reference plane R, and is minimum when crank 23 is perpendicular to vertical plane R.

Clearly, changes may be made to product handling device 1 as described and illustrated herein without, however, departing from the scope of the present invention.

## Claims

1. A device (1) for handling products (2), comprising a support cross member (5) extending substantially horizontally over a product handling area; an articulated pantograph arm (6) fixed to said support cross member (5) to open scissor-fashion in a substantially horizontal plane extending over the product handling area; and a movable gripping member (7), which is fixed to the free end of the articulated arm (6), so as to face the product handling area underneath, and is designed to selectively grip and retain at least one said product (2);
said articulated pantograph arm (6) comprising a top half-arm (8) fitted to the support cross member (5) to rotate, with respect to the support cross member, about a substantially vertical first axis (A); a bottom half-arm (9) fitted to said top half-arm (8) to rotate freely, with respect to the top half-arm, about a second axis (B) parallel to said first axis (A); and first cascade gearing (12) for transmitting rotation of the top half-arm (8) about the first axis (A) to the bottom half-arm (9), so that the bottom half-arm (9) rotates, with respect to the top half-arm (8) and about the second axis (B), at twice the angular speed of, and in the opposite direction to, rotation of the top half-arm (8) about said first axis (A), so as to coordinate scissor opening of said top half-arm (8) and said bottom half-arm (9);
said device (1) also comprising actuating means (21) which, on command, rotate the top half-arm (8) about said first axis (A), so as to scissor open said articulated pantograph arm (6) and so move said movable gripping member (7);
and being **characterized in that** the actuating means (21) comprise
a drive shaft (22), which extends coaxially with a third axis (D) parallel to and a distance from said first axis (A), and is fitted in rotary manner to said support cross member (5), with an axial end of the drive shaft facing said top half-arm (8);
a crank (23) fitted rigidly to the axial end of said drive shaft (22), and projecting from the drive shaft (22) in a direction substantially perpendicular to said third axis (D);
a cam follower pin (24) projecting from the distal end of said crank (23), coaxially with a fourth axis (E) parallel to and a distance from said third axis (D), so as to slide inside a longitudinal groove (24a) formed in the body of said top half-arm (8); and
a drive unit (25) connected mechanically to said drive shaft (22) to rotate it, on command, clockwise or anticlockwise about said third axis (D), and so rotate the crank (23) about said third axis (D).

2. A device as claimed in Claim 1, **characterized in that** a first end of said top half-arm (8) is hinged to said support cross member (5) by a first through pin (10), which extends coaxially with said first axis (A) and engages the body of said top half-arm (8) in freely rotating manner; and **in that** a first end of said bottom half-arm (9) is hinged to a second end of said top half-arm (8) by a second through pin (11), which extends coaxially with said second axis (B), is fitted rigidly to the bottom half-arm (9), and is fitted in rotary manner to the top half-arm (8).

3. A device as claimed in any one of the foregoing Claims, **characterized in that** said articulated pantograph arm (6) also comprises a fastening pin (16), which is fitted through the free end of the bottom half-arm (9), projects from the free end of the bottom half-arm coaxially with a fifth axis (C) parallel to the first axis (A), and is designed to support said movable gripping member (7); the distance (l₂) between said fifth axis (C) and said second axis (B) being equal to the distance (l₁) between said first axis (A) and said second axis (B).

4. A device as claimed in Claim 3, **characterized in that** said articulated pantograph arm (6) also comprises second cascade gearing (17) for transmitting rotation of the bottom half-arm (9), with respect to the top half-arm (8) and about said second axis (B), to said fastening pin (16), so that the fastening pin (16) rotates about said fifth axis (C) and with respect to the bottom half-arm (9) in the opposite direction to, and at half the angular speed of, rotation of the bottom half-arm (9) about the second axis (B) and with respect to the top half-arm (8).

5. A device as claimed in any one of the foregoing Claims, **characterized by** comprising an on-floor supporting structure having a straight supporting guide (3) extending substantially vertically alongside said product handling area; a support carriage (4) mounted to run along said straight guide (3); and drive means for moving the support carriage (4), on command, along said straight guide (3); the support cross member (5) being fixed to and projecting from said support carriage (4) over the product handling area.

## Patentansprüche

1. Einrichtung (1) zum Handhaben von Produkten (2), welche ein Lagerquerträgerteil (5) aufweist, welches sich im Wesentlichen horizontal über einen Produkthandhabungsbereich erstreckt; einen Gelenk-Pantograph-Arm (6), der am Lagerquerträgerteil (5) angebracht ist, um scherenartig sich in einer im Wesentlichen horizontalen Ebene zu öffnen, welche sich über den Produkthandhabungsbereich erstreckt; und ein bewegbares Greifteil (7), welches am freien Ende des Gelenkarms (6) angebracht ist, derart, dass es dem darunter liegenden Produkthandhabungsbereich zugewandt ist und ausgebildet ist, um selektiv zumindest ein bestimmtes Produkt (2) zu greifen und zu halten;
wobei der Gelenk-Pantograph-Arm (6) einen Kopf-Ha1b-Arm (8) aufweist, der am Lagerquerträgerteil (5) angebracht ist, um in Bezug auf das Lagerquerträgerteil um eine im Wesentlichen vertikale erste Achse (A) zu drehen; einen Boden-Halb-Arm (9), der am Kopf-Halb-Arm (8) angebracht ist, um in Bezug auf den Kopf-Halb-Arm um eine zweite Achse (B) parallel zur ersten Achse (A) frei zu drehen; und ein erstes Kaskadengetriebe (12) zur Übertragung der Drehung des Kopf-Halb-Arms (8) um die erste Achse (A) auf den Bodea-Halb-Arm (9), so dass der Boden-Halb-Arm (9) in Bezug auf den Kopf-Halb-Arm (8) und um die zweite Achse (B) mit der zweifachen Winkelgeschwindigkeit von und in der entgegengesetzten Richtung zu der Drehung des Kopf-Halb-Arms (8) um die erste Achse (A) dreht, so dass das Öffnen des Kopf-Halb-Arms (8) und des Boden-Halb-Arms (9) sich koordinatenartig schneiden;
wobei die Einrichtung (1) außerdem eine Betätigungseinrichtung (21) aufweist, welche auf Befehl den Kopf-Ha1b-Arm (8) um die erste Achse (A) dreht, um den Gelenk-Pantograph-Arm (6) scherenartig zu öffnen und um das bewegbare Greifteil (7) zu bewegen;
und **dadurch gekennzeichnet ist, dass** die Betätigungseinrichtung (21) aufweist:
eine Antriebswelle (22), welche sich koaxial mit einer dritten Achse (D) parallel zu und in einem Abstand von der ersten Achse (A) erstreckt und in drehbarer Weise am Lagerquerträgerteil (5) befestigt ist, wobei ein axiales Ende der Antriebswelle dem Kopf-Halb-Arm (8) zugewandt ist;
eine Kurbel (23), welche starr am axialen Ende der Antriebswelle (22) befestigt ist und die sich von der Antriebswelle (22) in einer Richtung im Wesentlichen senkrecht zur dritten Achse (D) ragt;
einen Nockenfolgerstift (24), der von dem distalen Ende der Kurbel (23) ragt, koaxial mit einer vierten Achse (E) parallel zu und einem Abstand von der dritten Achse (D), um so innerhalb einer Längsnut (24a) zu gleiten, welche im Körper des Kopf-Halb-Arms (8) gebildet ist; und
eine Antriebseinheit (25), welche mechanisch mit der Antriebswelle (22) verbunden ist und diese auf Befehl im Uhrzeigersinn oder gegen den Uhrzeigersinn um die dritte Achse (D) dreht, um somit die Kurbel (23) um die dritte Achse (D) zu drehen.

2. Einrichtung nach Anspruch 1, **dadurch gekennzeichnet, dass** das erste Ende des Kopf-Halb-Arms (8) an das Lagerquerträgerteil (5) über einen ersten Durchgangsstift (10) drehbar angelenkt ist, der sich koaxial mit der ersten Achse (A) erstreckt und den Körper des Kopf-Halb-Arms (8) in einer freien drehbaren Weise erfasst; und dass ein erstes Ende des Boden-Halb-Arms (9) an das zweite Ende des Kopf-Halb-Arms (8) über einen zweiten Durchgangsstift (11) drehbar angelenkt ist, der sich koaxial zu der zweiten Achse (B) erstreckt, starr am Boden-Halb-Arm (9) befestigt ist und in drehbarer Weise am Kopf-Halb-Arm (8) befestigt ist.

3. Einrichtung nach einem der vorhergehenden Ansprüche, **dadurch gekennzeichnet, dass** der Gelenk-Pantograph-Arm (6) außerdem einen Befestigungsstift (16) aufweist, der durch das freie Ende des Boden-Halb-Arms (9) eingepasst ist, vom freien Ende des Boden-Halb-Arms (9) koaxial mit einer fünften Achse (C) parallel zur ersten Achse (A) ragt und ausgebildet ist, das bewegbare Greifteil (7) zu lagern; wobei der Abstand (l₂) zwischen der fünften Achse (C) und der zweiten Achse (B) gleich dem Abstand (l₁) zwischen der ersten Achse (A) und der zweiten Achse (B) ist.

4. Einrichtung nach Anspruch 2, **dadurch gekennzeichnet**, das5 der Gelenk-Pantograph-Arm (6) außerdem ein zweites Kaskadengetriebe (17) aufweist, um die Drehbewegung des Boden-Halb-Arms (9) in Bezug auf den Kopf-Halb-Arm (8) und um die zweite Achse (B) auf dem Befestigungsstift (16) zu übertragen, so dass der Befestigungsstift (16) rund um die fünfte Achse (C) und in Bezug auf den Boden-Halb-Arm (9) in der entgegengesetzten Richtung zu und mit der Hälfte der Winkelgeschwindigkeit der Drehung des Boden-Halb-Arms (9) um die zweite Achse (B) und in Bezug auf den Kopf-Halb-Arm (8) dreht.

5. Einrichtung nach einem der vorhergehenden Ansprüche, **dadurch gekennzeichnet, dass** diese eine Flur-Lager-Strnktur aufweist, welche eine gerade Lagerführung (3) aufweist, welche sich im Wesentlichen vertikal längsseitig zum Produkthandhabungsbereich erstreckt; einen Lagerwagen (4), der befestigt ist, um längs der geraden Führung (3) zu laufen; und eine Antriebseinrichtung zum Bewegen des Lagerwagens (4) auf Befehl längs der geraden Führung (3); wobei das Lagerquerträgerteil (5) an dem Lagerwagen (4) über den Produkthandhabungsbereich befestigt ist und davon ragt.

## Revendications

1. Dispositif (1) pour manipuler des produits (2), comprenant une traverse de support (5) s'étendant sensiblement horizontalement sur une zone de manipulation de produits ; un bras de pantographe articulé (6) fixé sur ladite traverse de support (5) pour s'ouvrir à la manière d'un ciseau dans un plan sensiblement horizontal s'étendant sur la zone de manipulation de produits ; et un élément de préhension mobile (7) qui est fixé sur l'extrémité libre du bras articulé (6), afin de faire face à la zone de manipulation de produits au-dessous, et est conçu pour saisir et retenir sélectivement au moins l'un desdits produits (2) ;
ledit bras de pantographe articulé (6) comprenant un demi-bras supérieur (8) monté sur la traverse de support (5) pour tourner, par rapport à la traverse de support, autour d'un premier axe (A) sensiblement vertical ; un demi-bras inférieur (9) monté sur ledit demi-bras supérieur (8) pour tourner librement, par rapport au demi-bras supérieur, autour d'un deuxième axe (B) parallèle audit premier axe (A), et un premier engrenage en cascade (12) pour transmettre la rotation du demi-bras supérieur (8) autour du premier axe (A) au demi-bras inférieur (9), de sorte que le demi-bras inférieur (9) tourne, par rapport au demi-bras supérieur (8) et autour du deuxième axe (B), à une vitesse représentant deux fois la vitesse angulaire de, et dans la direction opposée à la rotation du demi-bras supérieur (8) autour dudit premier axe (A), afin de coordonner l'ouverture de ciseau dudit demi-bras supérieur (8) et dudit demi-bras inférieur (9) ;
ledit dispositif (1) comprenant également des moyens d'actionnement (21) qui, sur commande, font tourner le demi-bras supérieur (8) autour dudit premier axe (A), afin d'ouvrir à la manière d'un ciseau ledit bras de pantographe articulé (6) et de déplacer ledit élément de préhension mobile (7) ;
et étant **caractérisé en ce que** les moyens d'actionnement (21) comprennent :
un arbre d'entraînement (22) qui s'étend de manière coaxiale avec un troisième axe (D) parallèle à et à une certaine distance par rapport audit premier axe (A), et est monté d'une manière rotative sur ladite traverse de support (5), avec une extrémité axiale de l'arbre d'entraînement qui fait face audit demi-bras supérieur (8) ;
une manivelle (23) montée de manière rigide sur l'extrémité axiale dudit arbre d'entraînement (22), et faisant saillie de l'arbre d'entraînement (22) dans une direction sensiblement perpendiculaire audit troisième axe (D) ;
une broche de suiveur de came (24) faisant saillie de l'extrémité distale de ladite manivelle (23), de manière coaxiale avec un quatrième axe (E) parallèle et à une certaine distance dudit troisième axe (D), afin de coulisser à l'intérieur d'une rainure longitudinale (24a) formée dans le corps dudit demi-bras supérieur (8) ; et
une unité d'entraînement (25) raccordée de manière mécanique audit arbre d'entraînement (22) pour le faire tourner, sur commande, dans le sens des aiguilles d'une montre ou dans le sens inverse des aiguilles d'une montre autour dudit troisième axe (D) et de faire ainsi tourner la manivelle (23) autour dudit troisième axe (D).

2. Dispositif selon la revendication 1, **caractérisé en ce qu'**une première extrémité dudit demi-bras supérieur (8) est articulée par rapport à ladite traverse de support (5) par une première broche débouchante (10) qui s'étend de manière coaxiale avec ledit premier axe (A) et met en prise le corps dudit demi-bras supérieur (8) d'une manière librement rotative ; et **en ce qu'**une première extrémité dudit demi-bras inférieur (9) est articulée par rapport à une seconde extrémité dudit demi-bras supérieur (8) par une seconde broche débouchante (11), qui s'étend de manière coaxiale avec ledit deuxième axe (B), est montée de manière rigide sur le demi-bras inférieur (9) et est montée de manière rotative sur le demi-bras supérieur (8).

3. Dispositif selon l'une quelconque des revendications précédentes, **caractérisé en ce que** ledit bras de pantographe articulé (6) comprend également une broche de fixation (16), qui est montée à travers l'extrémité libre du demi-bras inférieur (9), fait saillie à partir de l'extrémité libre du demi-bras inférieur de manière coaxiale avec un cinquième axe (C) parallèle au premier au premier axe (A), et est conçue pour supporter ledit élément de préhension mobile (7) ; la distance (l₂) entre ledit cinquième axe (C) et ledit deuxième axe (B) étant égale à la distance (l₁) entre le premier axe (A) et ledit deuxième axe (B).

4. Dispositif selon la revendication 3, **caractérisé en ce que** ledit bras de pantographe articulé (6) comprend également un second engrenage en cascade (17) pour transmettre la rotation du demi-bras inférieur (9), par rapport au demi-bras supérieur (8) et autour dudit deuxième axe (B), à ladite broche de fixation (16), de sorte que la broche de fixation (16) tourne autour dudit cinquième axe (C) et par rapport au demi-bras inférieur (9) dans la direction opposée et à la moitié de la vitesse angulaire de la rotation du demi-bras inférieur (9) autour du deuxième axe (B) et par rapport au demi-bras supérieur (8).

5. Dispositif selon l'une quelconque des revendications précédentes, **caractérisé en ce qu'**il comprend une structure de support sur le sol ayant un guide de support droit (3) s'étendant sensiblement verticalement le long de ladite zone de manipulation de produits ; un chariot de support (4) monté pour rouler le long dudit guide droit (3) ; et des moyens d'entraînement pour déplacer le chariot de support (4), sur commande, le long dudit guide droit (3) ; la traverse de support (5) étant fixée sur et faisant saillie dudit chariot de support (4) sur la zone de manipulation de produits.
